# EUROPEAN PATENT SPECIFICATION

(11) **EP 0 723 681 B1**
(45) Date of publication and mention of the grant of the patent: **26.08.1998**
(21) Application number: 94921022.3
(22) Date of filing: 15.07.1994
(51) Int. Cl.: G06F 11/00

(54) **CODE SEQUENCE DETECTION**
KODESEQUENZERKENNUNG
DETECTION DE SEQUENCES DE CODAGE

(30) Priority: 20.07.1993 GB 9314997
(43) Date of publication of application: 31.07.1996
(73) Proprietor: NORTHERN TELECOM LIMITED, Montreal, Quebec H2Y 3Y4 (CA)
(72) Inventor: CARTER, Susan, Essex CM19 5QY (GB); TANSLEY, Dennis, Stewart, William, Braintree Essex CM7 8UN (GB)
(74) Representative: Ryan, John Peter William
(86) International application number: GB9401528
(87) International publication number: WO9503579

(56) References cited:
- EP-A- 0 268 293

## Description

This invention relates to a method and apparatus for software code sequence, e.g. for the detection of software clones.

Current software packages for system control, e.g. for the control of a digital telephone system, are becoming increasingly complex. Packages incorporating millions of lines of code are not unusual. A particular problem that has been experienced with such system control packages is that of identifying particular sequences or 'lumps' of code which may have been prepared by cloning a corresponding sequence. This form of analysis is desirable for a number of reasons. Firstly it may be possible to replace a number of substantially identical code sequences by a single sequence thus achieving an overall code reduction. This can save both on storage space and running time. Secondly, coding errors or bugs may manifest themselves in software from which cloned sequences have been derived. The more obvious coding errors can often be identified and corrected before the software is installed, but more subtle errors can remain undetected, sometimes,for several years, until a particular set of service conditions brings them to light. This may have catastrophic results leading to a crash of the entire system with consequential loss both of service revenue and customer confidence.

Current source code software development generally involves re-use of existing utility sized portions or lumps of existing code. These existing software lumps may comprise anything from a single line to a large number of lines and may provide e.g. a function or a group of functions. The re-use of source code is generally referred to as cloning wherein:-
1. An identical copy is made.
2. Changes in variable names are made.
3. Lines of code are added/deleted.
4. Recombinations of existing software lumps are produced.

This list is not, of course, exhaustive but it includes the more commonly produced clones. If for example a software fault is subsequently identified in one of these cloned packages it is of course important that all the clones of that package can be identified so that appropriate remedial action can be taken. It will be appreciated that searching for clones in a large software package can be a very difficult and time consuming operation, particularly if significant modification of a clone has been effected.

As software is developed, it is a common occurrence for a particular package to be written in a more compact and efficient form. If the package has been previously cloned, the benefits of code reduction cannot be passed on to the clone until these have been identified. In a large software package containing many clones there may be a considerable benefit to be obtained by code reduction.

The object of the present invention is to provide an improved method and apparatus for the analysis of software packages.

According to one aspect of the invention there is provided a method of analysing a software package comprising a plurality of code sequences, the method comprising generating for each said code sequence a corresponding vector having a predetermined number of components, and providing a neural network having input one for each of said vector components, the neural network comprising a matrix of neurons, each neuron performing a computational operation on the inputs that it receives, the neural network generating an output signal which is indicative of the nature of the particular code sequences being examined.

According to another aspect of the invention there is provided apparatus for analysis of a software source code package comprising a plurality of code sequences, the apparatus including a neural network having a plurality of inputs and outputs, and means for generating vectors one for each said code sequence and each said vector having a plurality of components equal to the number of inputs of the neural network, wherein the neural network comprises a matrix of neurons, each neuron being arranged to perform a computational operation on the inputs that it receives, the neural network being arranged to generate a signal at the outputs which is indicative of the nature of the particular code sequence being examined.

The neural network examines the source code sequence whereby to identify sequences of similar or identical construction. The technique has the advantage that there is no need for any prior knowledge of which particular sequences are to be searched for.

An embodiment of the invention will now be described with reference to the accompanying drawings in which:-
Fig. 1 is a schematic diagram of a neural network arrangement;
Fig. 2 shows in highly schematic form an apparatus for source code sequence analysis;
Figs. 3 and 4 illustrate a procedure for preliminary analysis of a source code sequence by examination of the pattern or layout of the code;
Fig. 5 is a histogram diagram illustrating a typical output for the apparatus of Fig. 5; and
Fig. 6 shows a further apparatus for source code sequence analysis.

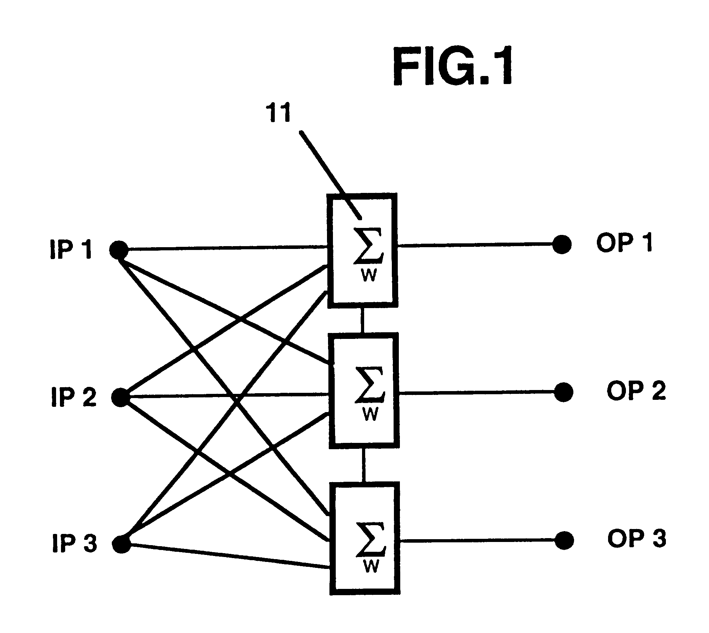

Referring to Fig. 1, this illustrates in schematic form the general construction of a neural network. The arrangement shown is of the type known as a self organising map (SOM) although it will be appreciated that other types of network may be employed. The network comprises a matrix of neurons (11 the Kohonen layer) each of which neuron is coupled to the network inputs IP1 to IP3. For simplicity only three neurons and three inputs are shown, but it will be appreciated that in practise the network will be far more extensive.

Each neuron performs a computational operation on the inputs that it receives. Typically this operation comprises the evaluation of a unique weighted run of the inputs. The network then performs a 'voting' process such that one neuron, i.e. the neuron with the highest weighted sum, is activated to generate a signal at the corresponding output.

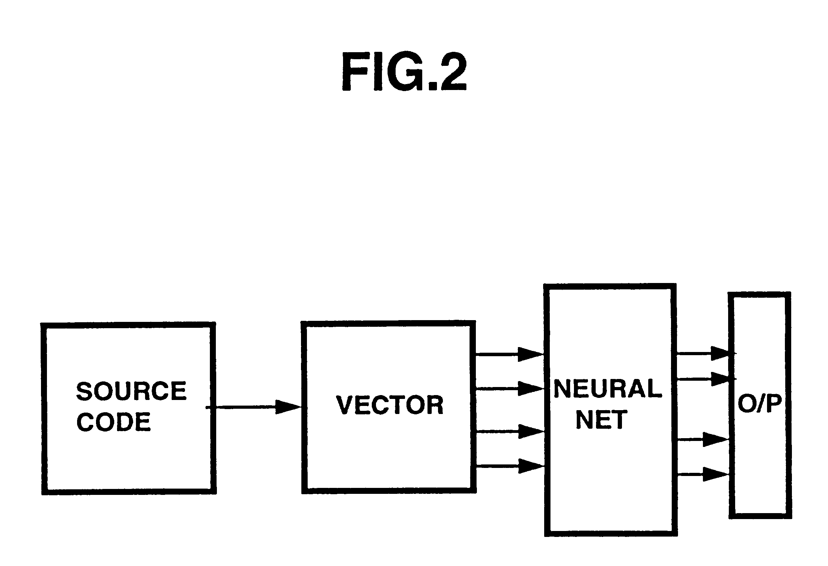

Referring now to Fig. 2, this illustrates an apparatus for the analysis of a source code sequence. The apparatus operates on successive sections of the source code to generate, for each section, a multicomponent vector characteristic of some feature of that section of code. The derivation of this vector will be described in further detail below. The components of this vector are fed each to a corresponding input of a neural network, e.g. a self organising map. In response to this input vector, one neuron of the network is activated to enable one of the network outputs, that output being indicative of the nature of the particular code sequence being examined.

As discussed above, we prefer to employ a self organising map in the neural network. This has a topology preserving property such that input vectors that are near to each other in a Euclidean sense are mapped near to each other by the network. In addition, no programming of the network is required as it organises itself without any need to 'know' what the required answer may be.

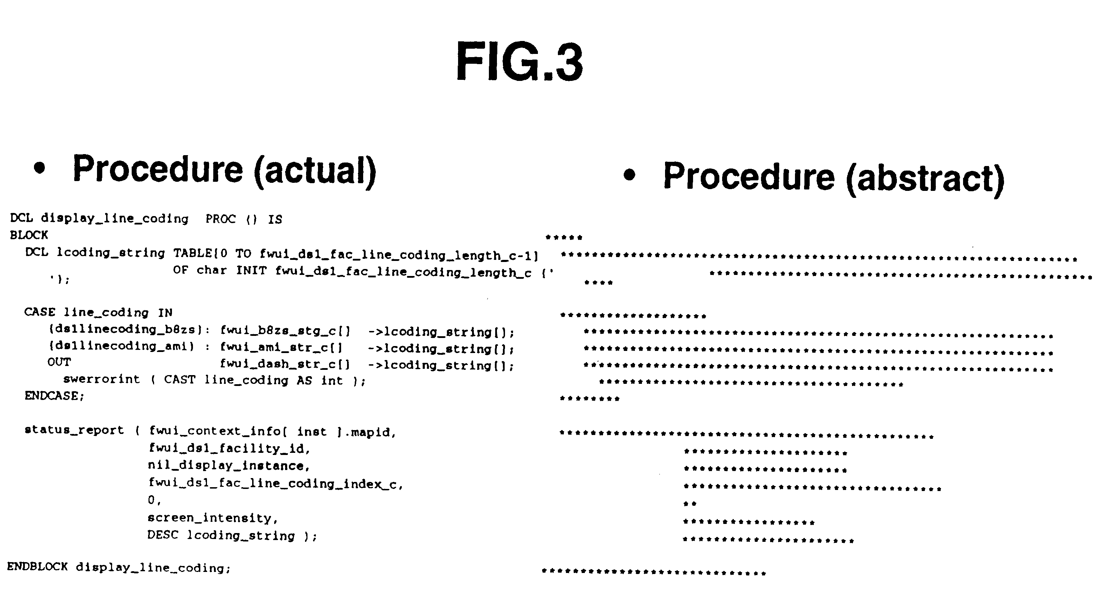

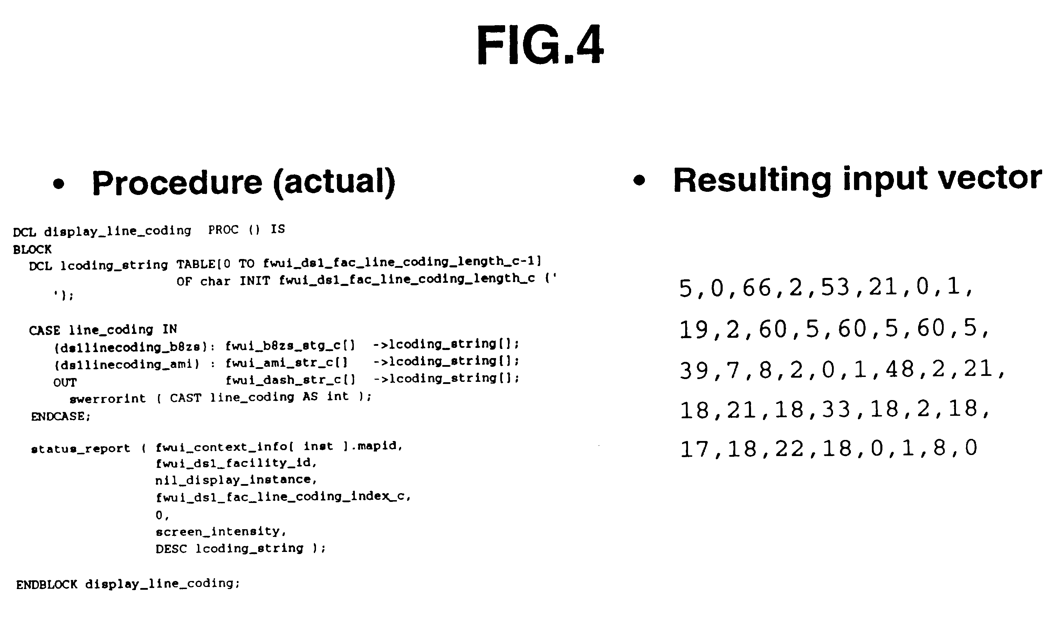

The characteristic vector may be generated from the source code sequence in a number of ways. One example is illustrated in Fig. 3 and 4 which illustrate the way in which a vector may be derived from the physical layout or pattern of line lengths of the code. Referring first to Fig. 3, the left hand portion shows a typical code sequence forming part of a large software package. The right hand portion of Fig. 3 is an abstract representation of that sequence in which each symbol is replaced e.g. by an asterisk. This abstract procedure is then used to derive a vector from its physical pattern. The derivation of the vector may be effected by one or more of the following characteristics of the abstract procedure:-
1. Change in indentation direction from line to line of the source code.
2. Indentation direction for each line.
3. Absolute line indentation.
4. Absolute line length.

Other features of the code pattern or layout may also be employed.

When a particular sequence is too long or too short to be accommodated, this mismatch may be overcome by truncation or by the insertion of padding components respectively.

Characteristic vectors may also be derived from other features of the code sequence. For example, the frequency of occurrence of particular keywords may be determined. Thus, in the actual procedure of Fig. 3, one might determine the occurrence frequency and distribution of keywords such as 'coding-string', '.fwui' and so on. Depending on the software involved, each vector generation technique may be used alone or together with other techniques to determine the particular vector of the software.

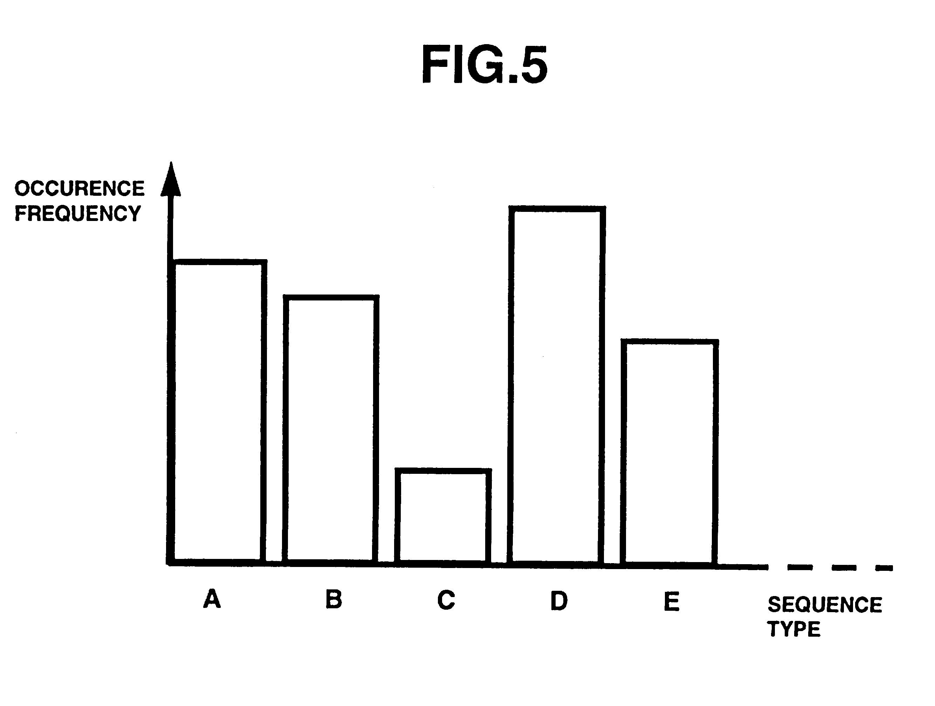

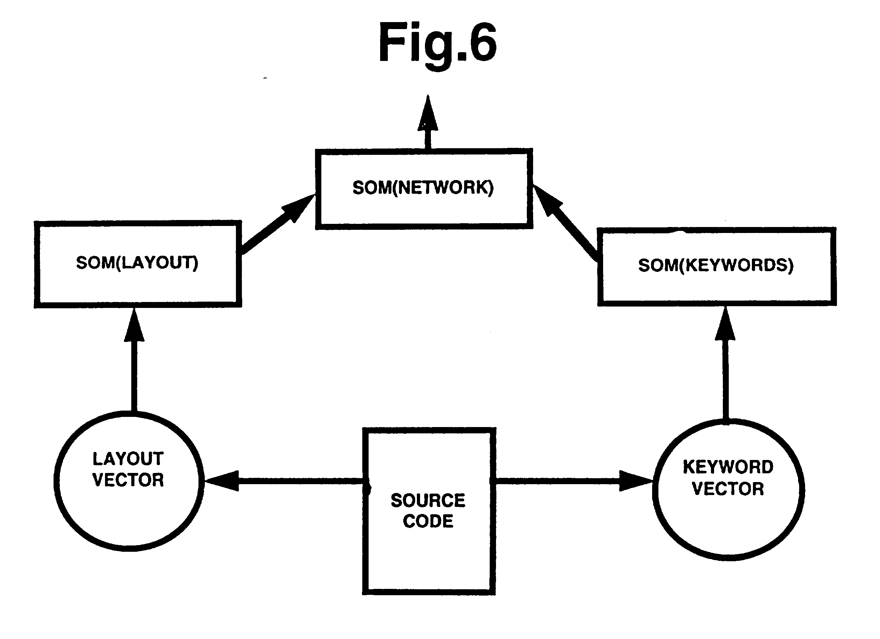

The output of the apparatus of Fig. 2, i.e. the cumulative results of the vecting operation of the neural network for each successive input vector, is illustrated in the histogram of Fig. 5. In effect the apparatus of Fig. 2 clarifies the various code sequences in the software package into groups (A, B, C ...) of similar or identical sequences. Within each group, each identical sequence can be regarded as a potential clone of a particular code sequence. It should be noted that the neural network performs this classification operation without any prior knowledge of the type of clone for which it may be searching. A further, somewhat more complex apparatus for analysing a software package is shown schematically in Fig. 6 of the drawings. In this arrangement two vectors are derived from each code sequence, one from the layout and the other from keywords as described above. Each vector is fed to a corresponding self-organising map (SOM-layout and SOM-keywords). The outputs from each self-organising maps are then fed to a further self-organising map (SOM-Network) the output of which is of the histogram form illustrated in Fig. 5.

## Claims

1. A method of analysing a software package comprising a plurality of code sequences, the method comprising generating for each said code sequence a corresponding vector having a predetermined number of components, and providing a neural network having one input for each of said vector components, the neural network comprising a matrix of neurons, each neuron performing a computational operation on the inputs that it receives, the neural network generating an output signal which is indicative of the nature of the particular code sequences being examined.

2. A method as claimed in claim 1, wherein each said vector corresponds to the physical layout of the code sequence.

3. A method as claimed in claim 1, wherein said vector corresponds to the frequency and distribution of keywords in said code sequence.

4. A method as claimed in claim 1, 2 or 3, wherein said neural network comprises a self-organising map.

5. A method as claimed in claim 4, further comprising providing the self-organising map with a topology preserving property such that input vectors that are near to each other in a Euclidean sense are mapped near to each other by the network.

6. A method as claimed in any one of the preceding claims further comprising using the output signal to identify substantially identical code sequences in the software package.

7. Apparatus for analysis of a software source code package comprising a plurality of code sequences, the apparatus including a neural network having a plurality of inputs and outputs, and means for generating vectors one for each said code sequence and each said vector having a plurality of components equal to the number of inputs of the neural network, wherein the neural network comprises a matrix of neurons, each neuron being arranged to perform a computational operation on the inputs that it receives, the neural network being arranged to generate a signal at the outputs which is indicative of the nature of the particular code sequence being examined.

8. An apparatus as claimed in claim 7, wherein said vector generation means is adapted to generate vectors corresponding each to the physical layout of a said source code sequence.

9. An apparatus as claimed in claim 7, wherein said vector generation means is adapted to generate vectors corresponding to the frequency and distribution of keywords in a said source code sequence.

10. An apparatus as claimed in claim 7, 8 or 9, wherein the neural network comprises a self-organising map.

## Patentansprüche

1. Verfahren zur Analyse eines Softwarepaketes mit einer Vielzahl von Codesequenzen, wobei das Verfahren die Erzeugung eines entsprechenden Vektors mit einer vorgegebenen Anzahl von Komponenten für jede der Codesequenzen und die Schaffung eines Neuronennetzes mit einem Eingang für jeden der genannten Vektorkomponenten umfaßt, wobei das Neuronennetz eine Matrix von Neuronen umfaßt und jedes Neuron eine Rechenoperation an den Eingängen ausführt, die es empfängt, und wobei das Neuronennetz ein Ausgangssignal erzeugt, das die Art der speziellen untersuchten Codesequenz anzeigt.

2. Verfahren nach Anspruch 1,
bei dem jeder Vektor der körperlichen Aufbau der Codesequenz entspricht.

3. Verfahren nach Anspruch 1,
bei dem der Vektor der Häufigkeit und Verteilung von Schlüsselwörtern in der Codesequenz entspricht.

4. Verfahren nach Anspruch 1, 2 oder 3,
bei dem das Neuronennetz eine selbstorganisierende Verknüpfung umfaßt.

5. Verfahren nach Anspruch 4,
das weiterhin eine Schaffung der selbstorganisierenden Verknüpfung mit einer die Topologie beibehaltenden Eigenschaft derart umfaßt, daß Eingangsvektoren, die in einem euklidischen Sinn nahe beieinander liegen, von dem Netz nahe beieinanderliegend zueinander abgebildet werden.

6. Verfahren nach einem der vorhergehenden Ansprüche,
das weiterhin die Verwendung des Ausgangssignals zur Identifikation von im wesentlichen identischen Codesequenzen in dem Softwarepaket umfaßt.

7. Vorrichtung für die Analyse eines Software-Sourcecodepaketes mit einer Vielzahl von Codesequenzen, wobei die Vorrichtung ein Neuronennetz mit einer Vielzahl von Eingängen und Ausgängen und Einrichtungen zur Erzeugung von Vektoren, einen für jede der genannten Codesequenzen, einschließt und jeder der Vektoren eine Mehrzahl von Komponenten gleich der Anzahl von Eingängen des Neuronennetzes hat, und wobei das Neuronennetz eine Matrix von Neuronen umfaßt und jedes Neuron so angeordnet ist, daß es eine Rechenoperation an den Eingängen ausführt, die es empfängt, wobei das Neuronennetz so angeordnet ist, daß es ein Signal an den Ausgängen erzeugt, das die Art der speziellen untersuchten Codesequenz anzeigt.

8. Vorrichtung nach Anspruch 7,
bei dem die Vektorerzeugungseinrichtung zur Erzeugung von Vektoren ausgebildet ist, die jeweils dem körperlichen Aufbau einer Source-Codesequenz entsprechen.

9. Vorrichtung nach Anspruch 7,
bei der die Vektorerzeugungseinrichtung so ausgebildet ist, daß sie Vektoren erzeugt, die der Häufigkeit und Verteilung von Schlüsselworten in der Source-Codesequenz entsprechen.

10. Vorrichtung nach Anspruch 7, 8 oder 9,
bei der das Neuronennetz eine selbstorganisierende Verknüpfung umfaßt.

## Revendications

1. Procédé d'analyse d'un ensemble logiciel comprenant plusieurs séquences de code, le procédé comprenant la création, pour chaque séquence de code, d'un vecteur correspondant ayant un nombre prédéterminé de composantes, et la disposition d'un réseau de neurones ayant une entrée pour chacune des composantes du vecteur, le réseau de neurones comprenant une matrice de neurones, chaque neurone effectue une opération de calcul sur les signaux d'entrée qu'il reçoit, le réseau de neurones créant un signal de sortie qui est représentatif de la nature des séquences particulières de code qui sont examinées.

2. Procédé selon la revendication 1, dans lequel chaque vecteur correspondant à la disposition physique de la séquence de code.

3. Procédé selon la revendication 1, dans lequel le vecteur correspond à la fréquence et à la distribution des mots clés dans la séquence de code.

4. Procédé selon la revendication 1, 2 ou 3, dans lequel le réseau de neurones est une carte à auto-organisation.

5. Procédé selon la revendication 4, comprenant en outre la disposition de la carte à auto-organisation avec une propriété de préservation de topologie telle que les vecteurs d'entrée qui sont proches mutuellement au sens euclidien sont représentés les uns près des autres par le réseau.

6. Procédé selon l'une quelconque des revendications précédentes, comprenant en outre l'utilisation du signal de sortie pour l'identification des séquences de code pratiquement identiques dans l'ensemble logiciel.

7. Appareil d'analyse d'un ensemble de code source de logiciel comprenant plusieurs séquences de code, l'appareil comprenant un réseau de neurones ayant plusieurs entrées et plusieurs sorties, et un dispositif de création de vecteurs à raison d'un vecteur pour chaque séquence de code, chaque vecteur ayant plusieurs composantes dont le nombre est égal au nombre de signaux d'entrée du réseau de neurones, dans lequel le réseau de neurones comprend une matrice de neurones, chaque neurone étant destiné à effectuer une opération de calcul sur les signaux d'entrée qu'il reçoit, le réseau de neurones étant disposé afin qu'il crée aux sorties un signal qui est représentatif de la nature de la séquence particulière de code qui est examinée.

8. Appareil selon la revendication 7, dans lequel le dispositif de création de vecteurs est destiné à créer des vecteurs correspondant chacun à la disposition physique de la séquence du code source.

9. Appareil selon la revendication 7, dans lequel le dispositif de création de vecteurs est destiné à créer les vecteurs correspondant à la fréquence et à la distribution des mots clés dans une séquence de code source.

10. Appareil selon la revendication 7, 8 ou 9, dans lequel le réseau de neurones est une carte à auto-organisation.
